Europäisches Patentamt

European Patent Office

Office européen des brevets

(11) Numéro de publication: **0 064 908**
**B1**

(12) **FASCICULE DE BREVET EUROPEEN**

(45) Date de publication du fascicule du brevet: **18.12.85**

(51) Int. Cl.⁴: **G 01 J 5/00**, G 01 K 11/22

(21) Numéro de dépôt: **82400743.9**

(22) Date de dépôt: **27.04.82**

(54) **Procédé et dispositif de mesure de température d'un corps à l'aide de micro-ondes.**

(30) Priorité: **05.05.81 FR 8109281**

(43) Date de publication de la demande:
**17.11.82 Bulletin 82/46**

(45) Mention de la délivrance du brevet:
**18.12.85 Bulletin 85/51**

(84) Etats contractants désignés:
**DE GB NL**

(56) Documents cités:
**WO-A-80/02745**
**FR-A-2 415 799**
**US-A-4 178 100**

(73) Titulaire: **CENTRE NATIONAL DE LA**
**RECHERCHE SCIENTIFIQUE (C.N.R.S.)**
**15, Quai Anatole France**
**F-75700 Paris (FR)**

(72) Inventeur: **Chive, Maurice**
**2 Allée des Terrasses**
**F-59650 Villeneuve d'Ascq (Nord) (FR)**
Inventeur: **Constant, Eugène**
**39 Avenue du Vieux Château**
**F-59650 Villeneuve d'Ascq (Nord) (FR)**
Inventeur: **Leroy, Yves**
**80 rue Gaston Baratte**
**F-59650 Villeneuve d'Ascq (Nord) (FR)**
Inventeur: **Mamouni, Ahmed**
**43/43 rue Baudouin IX**
**F-59650 Villeneuve d'Ascq (Nord) (FR)**
Inventeur: **Robillard, Michèle**
**51 rue Jacquemars Giélée**
**F-59000 Lille (Nord) (FR)**
Inventeur: **Van de Velde, Jean-Claude**
**07/233 Résidence Europe**
**F-59370 Mons-en-Baroeul (Nord) (FR)**

(74) Mandataire: **Lepage, Jean-Pierre**
**Cabinet Lepage & Aubertin Innovations et**
**Prestations 23/25, rue Nicolas Leblanc**
**F-59011 Lille Cédex 1 (Nord) (FR)**

Courier Press, Leamington Spa, England.

EP 0 064 908 B1

**Description**

L'invention est relative à un procédé de mesure de température d'un corps en micro-ondes. Plus précisément, l'invention est relative à un procédé de mesure en micro-ondes, permettant de maîtriser le volume de matière sous investigation, et d'obtenir une meilleure résolution spatiale ainsi qu'à un dispositif mettant en oeuvre le procédé.

Les procédés de mesure de température d'un corps en micro-ondes actuellement existants tels que décrits dans les brevets français FR—A—2.415.799, consistent à placer au voisinage de la surface du corps, ou en contact avec celle-ci, une sonde, à capter les signaux de bruits thermiques émis par un volume du corps sous investigation de la sonde. Les signaux de bruits thermiques sont ensuite amplifiés, éventuellement traités, de manière à sortir un signal qui est fonction de la température régnant dans le volume sous investigation.

Il faut remarquer que dans de tels procédés, le volume sous investigation dépend de la nature du corps, et des caractéristiques de la sonde utilisée. Ainsi, pour un même corps, le volume sous investigation reste sensiblement semblable à lui-même, en particulier lors du déplacement de la sonde par rapport à la surface du corps.

Ainsi, dans le cas où un dispositif, mettant en oeuvre l'un des procédés existants, est destiné à détecter une éventuelle anomalie locale de température, sous la surface d'un corps, et par exemple d'un tissu vivant, il sera effectivement possible de localiser cette anomalie, lorsqu'elle sera comprise dans le volume sous investigation de la sonde. Cependant, il sera difficile, voir impossible, de localiser cette anomalie à l'intérieur du volume sous investigation.

Ainsi, schématiquement, la résolution spatiale des dispositifs existants est limitée au volume sous investigation associé à la sonde. Pour affiner cette résolution spatiale, il est actuellement possible de changer la sonde, de manière à changer également le volume qui lui est associé. Cependant, un tel changement nécessite des manipulations, et des réglages d'adaptation de la chaîne de mesures à la nouvelle sonde.

D'autre part, il faut remarquer que pour un volume sous investigation associé à une sonde, les signaux émis par les volumes élémentaires plus proches de la sonde présentent au niveau de celle-ci un poids plus fort que les signaux émis par les volumes élémentaires plus éloignés. En d'autres termes, les signaux émis par les volumes élémentaires proches de la surface du corps masquent ceux émis par le reste du volume sous investigation.

Un des buts de la présente invention est de proposer un procédé de mesure de température en micro-ondes, ainsi qu'un dispositif mettant en oeuvre le procédé, qui permettent de maitriser le volume sous investigation, sans nécessiter le changement de sonde.

Un autre but de la présente invention est de proposer un procédé et un dispositif qui permettent de mesurer la température régant dans un volume faisant partie des volumes d'investigation des sondes, mais réduit par rapport à ceux-ci et d'améliorer la résolution spatiale.

Un autre but de la présente invention est de proposer un procédé et un dispositif qui permettent de faire varier la résolution spatiale.

Selon l'invention, le procédé de mesure de température d'un corps à l'aide de micro-ondes, consistant à placer au voisinage de la surface du corps ou en contact avec celle-ci une sonde, qui capte les signaux de bruits thermiques émis par un premier volume du corps sous investigation associé à la sonde, est caractérisé par le fait que l'on dispose au moins une autre sonde du même type que ladite sonde au voisinage de la surface du corps, ou en contact avec celle-ci, ladite autre sonde captant les signaux de bruits thermiques emis par un deuxieme volume $(V'_b)$ dudit corps (2), de manière à ce que l'ensemble des volumes sous investigation associés aux sondes respectives présente une partie volumique commune, que l'on traite les signaux de bruits thermiques captés par les sondes en réalisant une amplification et une corrélation par laquelle on rend prépondérants les signaux émis parla partie volumique commune vis-à-vis des signaux émis par le reste des volumes sous investigation associés aux sondes, et que l'on forme à partir des signaux rendus prépondérants un signal de sortie fonction de la température régnant dans les volumes sous investigation.

Un dispositif pour la mise en oeuvre du procédé selon l'invention est défini dans la revendication 9.

L'invention sera mieux comprise si l'on se réfère à la description ci-dessous ainsi qu'aux dessins en annexe qui en font partie intégrante.

La figure 1 schématise un procédé traditionnel de mesure de température en micro-ondes.

La figure 2 est un schéma de principe de l'invention.

La figure 3 schématise le procédé selon l'invention, dans un mode de mise en oeuvre.

La figure 4 est une variante du procédé relatif à la figure 3.

La figure 5 schématise un autre mode de mise en oeuvre de l'invention.

La figure 6 est une variante du schéma de la figure 5.

La figure 7 schématise une variante des moyens de déphasage cyclique à 180 degrés.

La figure 8 illustre la mise en oeuvre du procédé relatif aux figures 5 et 6.

Les figures 9 et 10 schématisent les modes de variation de la résolution spatiale.

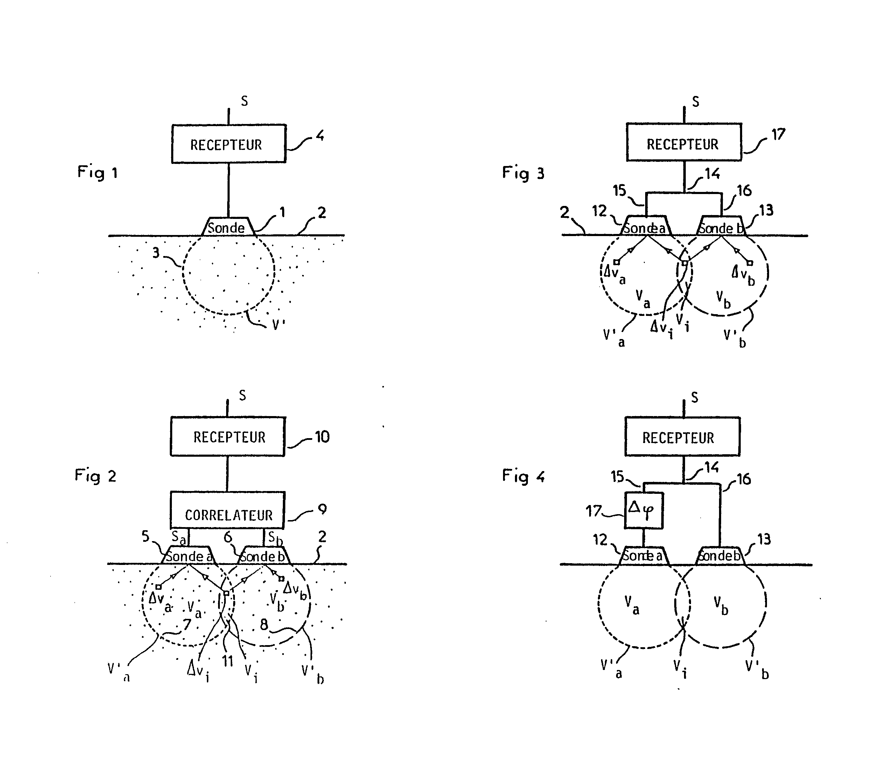

Dans la figure 1, on a schématisé un procédé conventionnel de mesure de température en micro-ondes. Ce procédé met en oeuvre une sonde 1, placée au voisinage de la surface 2 d'un corps, ou en contact avec cette surface. La sonde capte les signaux de bruits thermiques émis par un volume V' du corps, situé sous sa surface 2, qui est dit volume sous investigation.

Le volume V' est schématisé en figure 1 par le trait pointillé 3. Il dépend de la nature du corps, d'une part, et des caractéristiques de la sonde 1, d'autre part.

La sonde 1 est reliée à un récepteur amplificateur 4, qui amplifie les signaux captés par la sonde, et sort un signal S fonction de la température régnant dans le volume sous investigation V'.

La figure 2 est relative au schéma de principe de la présente invention. Celle-ci met en oeuvre au moins deux sondes 5 et 6, qui seront également désignées par sonde a et sonde b. Chaque sonde, 5 et 6, ou a et b, présente son propre volume d'investigation, 7 et 8, ou $V'_a$ et $V'_b$.

Comme pour le cas précédent, les volumes sous investigation $V'_a$ et $V'_b$ dépendent de la nature du corps et des caractéristiques des sondes a et b.

Les deux sondes a et b, ou plus généralement les différentes sondes, sont disposées de manière à ce que leur volume sous investigation respectif présente une intersection non nulle. Ainsi, dans le cas de la figure 2, les volumes $V'_a$ et $V'_b$ présentent une partie volumique commune $V_i$.

Si l'on se réfère à la théorie des ensembles, les volumes $V'_a$, $V'_b$ et $V_i$ répondent aux équations suivantes,

$$(1)\ V_i = V'_a \cap V'_b$$
$$(2)\ V'_a = V_a \cup V_i$$
$$(3)\ V'_b = V_b \cup V_i$$

En d'autres termes, pour le volume sous investigation $V'_a$ de la sonde a, les signaux en provenance des différents volumes élémentaires $\Delta v_a$ du volume $V_a$ seront captés uniquement par la sonde a. Il en est de même pour les signaux en provenance des différents volumes élémentaires $\Delta v_b$ du volume $V_b$, qui seront uniquement captés par la sonde b.

Par contre, les signaux émis par les volumes élémentaires $\Delta v_i$ du volume commun $V_i$ des volumes sous investigation, seront captés à la fois par la sonde a et par la sonde b.

Selon l'invention, les signaux $S_a$ et $S_b$, respectivement captés par les sondes a et b sont traités en parallèle par un corrélateur 9. Au niveau de ce dispositif, les signaux émis par les volumes $V_a$ et $V_b$ sont "décorrélés", c'est-à-dire qu'ils ne présentent pas de rapport entre eux. Par contre, les signaux de bruits thermiques émis par le volume commun $V_i$ sont "corrélés", car ils proviennent d'un même volume via des sondes différentes.

En sortie du corrélateur 9, les signaux sont traités par un récepteur amplificateur 10. Eventuellement, le corrélateur et le récepteur amplificateur peuvent être combinés.

Il faut par ailleurs remarquer que les signaux de bruits thermiques pris en considération sont situés dans le domaine des micro-ondes, ou des hyperfréquences, c'est-à-dire fréquences comprises entre 0,1 et 20 GHz approximativement, et sont de nature aléatoire.

La présente invention va être illustrée dans deux modes de mise en oeuvre différents. Dans ces deux modes, les longueurs d'ondes et les déphasages énoncés sont relatifs à la fréquence centrale de la bande de fréquence dans laquelle les signaux de bruits thermiques sont traités et amplifiés. En réalité, en toute rigueur, il faudrait étendre le présent raisonnement à toutes les fréquences situées dans la bande de fréquence du dispositif.

Les figures 3 et 4 sont relatives à un mode de mise en oeuvre du procédé selon l'invention. Pour ces figures, deux sondes a, b, 12, 13 ou plus, sont disposées à la surface 2 d'un corps, de manière à ce que leur volume sous investigation respectif $V'_a$ et $V'_b$ présente un volume commun $V_i$. Les sondes a et b sont reliées électriquement en 14. Eventuellement, d'autres sondes sont également reliées en 14. Les chemins électriques 15 et 16 séparant les sondes du point de connexion 14 sont sensiblement identiques. Le point de connexion 14 est relié électriquement à un récepteur amplificateur d'un type connu, qui sort un signal S.

Les inventeurs ont remarqué que lorsque deux sondes sont reliées électriquement en parallèle, sans que leur volume sous investigation présente une partie commune, la puissance des signaux est du même ordre que la puissance des signaux qui seraient captés par une seule sonde. Ainsi, la puissance des signaux captés par chacune des sondes ne s'ajoute pas arithmétiquement, mais c'est approximativement la demi-somme des puissances captées par chacune des sondes qui est transmise au récepteur amplificateur dans le cas de sondes identiques en présence d'un milieu de température sensiblement uniforme.

Ainsi, la contribution d'un volume élémentaire sous investigation de l'une des sondes est approximativement divisée par deux, lorsque deux sondes sont utilisées, comparé au cas où une sonde unique serait reliée au récepteur amplificateur.

Les inventeurs pensent que ce phénomène provient de la communication électrique entre les sondes, et de pertes de puissance au niveau du point de jonction 14.

Dans le cas de la figure 3, les signaux de bruits thermiques en provenance du volume $V_a$ sont uniquement captés par la sonde a. Il en est de même pour le volume $V_b$ avec la sonde b. Par contre, les volumes élémentaires $\Delta v_i$ du volume commun $V_i$ sont captés à la fois par la sonde a et la sonde b. Ainsi, approximativement, les volumes élémentaires $\Delta v_i$ du volume $V_i$ peuvent présenter une contribution double de celle des volumes élémentaires des volumes $V_a$ et $V_b$. Les signaux en provenance de $V_a$ et $V_b$ sont en quelque sorte effacés vis-à-vis des signaux en provenance du volume $V_i$. Plus le nombre de sondes est

3

important, plus ce phénomène s'accentue, étant donné que la contribution de chacune des sondes est approximativement divisée par le nombre de sondes, comparée au cas où une seule sonde serait reliée au récepteur amplificateur.

Ceci n'est qu'approximatif, car les signaux de bruits thermiques émis par un volume élémentaire $\Delta v_i$ du volume commun $V_i$ en direction des sondes a et b ne s'ajoutent pas arithmétiquement au niveau du point de connexion électrique 14. En effet, un déphasage existe entre les deux signaux, du fait de la différence de distance entre le volume $\Delta v_i$ et les sondes a et b.

Au-delà du point de connexion 14, la puissance S' du signal répond approximativement à l'équation suivante:

$$(4) \quad S' = \Sigma_{v_a} k_a . A^2_a . T_a + \Sigma_{v_b} k_b . B^2_b . T_b + \Sigma_{v_i} k_i A_i B_i . T_i . \cos \varphi_i$$

dans cette équation, $k_a$, $k_b$, $k_i$ désignent des constantes. $A_a$, $B_b$, $A_i$ et $B_i$ désignent respectivement les coefficients de transmission du champ électrique entre les volumes élémentaires $\Delta v_a$, $\Delta v_b$, $\Delta v_i$ et leurs sondes associées a et b. $T_a$, $T_b$, $T_i$ désignent respectivement les températures régnant dans les volumes élémentaires $\Delta v_a$, $\Delta v_b$, $\Delta v_i$.

Le premier terme de l'équation (4) est la contribution du volume $V_a$, le second celle du volume $V_b$ et le troisième celle du volume $V_i$. Dans ce troisième terme, $\varphi_i$ désigne le déphasage entre les signaux émis respectivement vers les sondes a et b pour la fréquence moyenne de la mesure. Ce déphasage s'exprime par

$$(5) \quad \varphi_i = 2\pi . f . \tau_i$$

où f désigne la fréquence et $\tau_i$ le retard entre les deux signaux.

Ainsi, dans le signal S', les deux premiers termes relatifs aux volumes $V_a$ et $V_b$ sont indépendants, les signaux de bruits thermiques en provenance de ces deux volumes sont décorrélés. Par contre, dans le troisième terme, les signaux en provenance du volume $V_i$ sont corrélés, et un déphasage $\varphi_i$ intervient.

La figure 4 est une variante de la figure 3, selon laquelle un déphaseur 17 a été introduit dans l'une des lignes électriques, par exemple la ligne 15, en-deçà du point de connexion 14. Ce déphaseur introduit dans le signal de la sonde a un déphasage $\Delta\varphi$.

Dans l'équation (4), du signal S', le premier terme reste globalement inchangé, et le déphasage $\Delta\varphi$ intervient au niveau du troisième terme qui s'écrit maintenant

$$(6) \quad \Sigma_{v_i} k_i . A_i . B_i . T_i . \cos (\varphi_i + \Delta\varphi)$$

Ainsi, le déphasage $\Delta\varphi$ permet de faire varier la corrélation entre les signaux en provenance du volume $V_i$. En d'autres termes, le déphasage $\Delta\varphi$ fait varier en particulier les zones du volume commun $V_i$ pour lesquelles le cosinus est sensiblement nul, et celles pour lesquelles le cosinus est voisin de 1.

Ainsi, le couplage électrique en parallèle de sondes réalise une corrélation entre les signaux émis par le volume commun aux différents volumes sous investigation des sondes. De ce fait, la contribution du volume commun au signal final peut être plus importante que celle des volumes tels que les volumes $V_a$ et $V_b$. L'Homme de l'Art extrapolera facilement le présent raisonnement au cas où plus de deux sondes sont reliées électriquement.

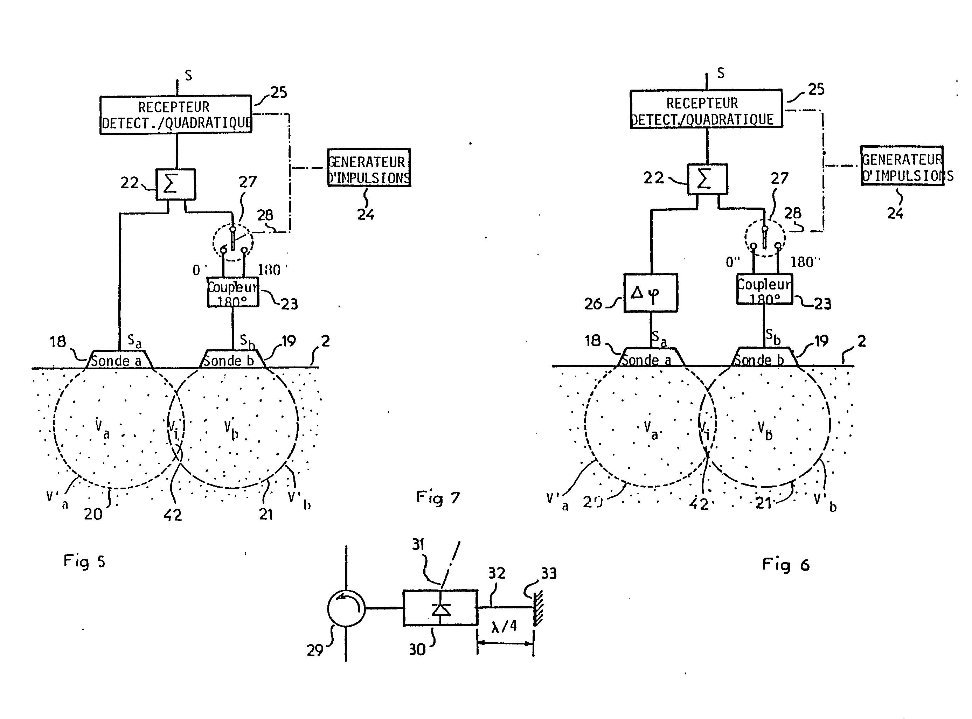

Les figures 5 à 8 sont relatives à une autre mise en oeuvre de l'invention. Selon cette mise en oeuvre, les signaux de bruits thermiques en provenance des volumes $V_a$ et $V_b$ précédents ont une contribution sensiblement nulle au signal final, et seuls les signaux de bruits thermiques en provenance du volume commun $V_i$ interviennent dans ce signal.

Le schéma de principe est donné dans la figure 5, dans le cas où deux sondes sont utilisées.

Deux sondes a et b, 18 et 19 sont disposées au voisinage de la surface 2, ou en contact avec celles-ci. Elles présentent respectivement un volume sous investigation $V'_a$ et $V'_b$, 20 et 21, qui ont une partie commune $V_i$, 42.

L'une des sondes, et par exemple la sonde a, est connectée à des moyens sommateurs 22, tel qu'un Té. La sonde b est reliée au sommateur via des moyens déphaseurs cycliques 23. Ces moyens déphaseurs cycliques sont commandés par un générateur d'impulsions 24, qui leur confère un rapport cyclique égal à 1/2.

En sortie des moyens déphaseurs 23, le signal $S_b$, en provenance de la sonde b, est déphasé de 0 degré sur une demi-période du générateur d'impulsions, et de 180 degrés sur la demi-période suivante.

En sortie des moyens sommateurs 22, le signal est traité par des moyens 25, qui consistent par exemple en un récepteur grand gain et faible bruit avec détection quadratique. Le détecteur quadratique réalise une élévation au carré du signal d'entrée des moyens de traitement 25.

Par ailleurs, le générateur d'impulsions 24 commande également au niveau des moyens de traitement 25 une détection synchrone au cycle des moyens déphaseurs cycliques 23.

On peut montrer qu'en sortie des moyens de traitement, le signal S se présente sous la forme:

$$(7) \quad S_1 = \Sigma_{v_a} k_a . A^2_a . T_a + \Sigma_{v_b} ki_b . B^2_b . T_b + \Sigma_{v_i} ki . [A^2_i + B^2_i + 2 . A_i . B_i \cos\varphi_i] . T_i$$

sur la demi-période où le signal issu de la sonde b est déphasé de 0 degré par les moyens de déphasage 23, et

$$(8)\ S_2 = \Sigma_{v_a} k_a.A^2_a.T_a + \Sigma_{v_b} k_b.B^2_b.T_b + \Sigma_{v_i} ki[A^2_i + B^2_i + 2.A_i.B_i\cos(\varphi_i + 180°)].T_i$$

sur la demi-période où le signal issu de la sonde $S_b$ est déphasé de 180 degrés par les moyens déphaseurs 23.

L'équation précédente (8) peut être transformée. Elle devient

$$(9)\ S_2 = \Sigma_{v_a} k_a.A^2_a.T_a + \Sigma_{v_b} k_b.B^2_b.T_b + \Sigma_{v_i} ki[A^2_i + B^2_i - 2.A_i.B_i\cos\varphi_i].T_i$$

Dans l'équation de $S_2$, le déphasage de 180 degrés n'intervient pas au niveau du second terme car le signal issu de la sonde b déphasé de 180 degrés est élevé au carré par le détecteur quadratique.

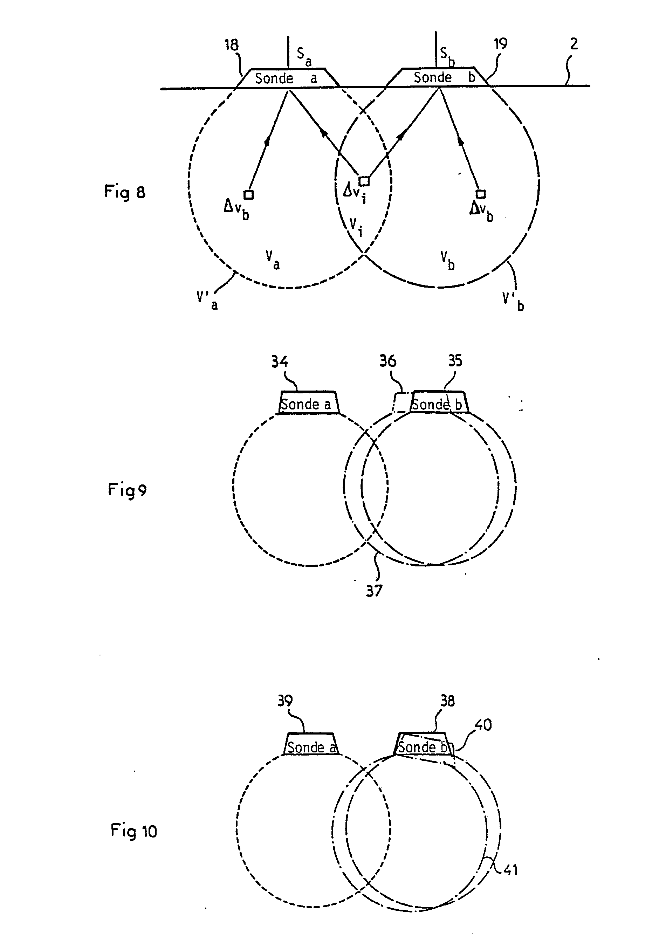

Dans les formules précédentes, comme relativement au premier mode de mise en oeuvre, $k_a$, $k_b$, $k_i$ sont des constantes qui dépendent de le nature du corps et des caractéristiques des sondes, et d'autres paramètres. $A_a$, $B_b$, $A_i$ et $B_i$ sont les coefficients de transmission du champ électrique, respectivement du volume élémentaire, $V_a$ vers la sonde a, de $V_b$ vers la sonde b, et de $V_i$ vers la sonde a et la sonde b, tel que cela est schématisé en figure 8. $T_a$, $T_b$ et $T_i$ sont respectivement les températures régnant dans les volumes élémentaires, $\Delta v_a$, $\Delta v_b$, et $\Delta v_i$.

La variable $\varphi_i$ désigne le déphasage entre les signaux en provenance du volume $\Delta v_i$ via la sonde a d'une part, et via la sonde b d'autre part. Dans l'équation (8), ce déphasage est augmenté de 180 degrés, du fait des moyens déphaseurs 23.

Les signaux $S_1$ et $S_2$ sont traités par tout moyen approprié, et par exemple par une détection synchrone ou par un filtrage numérique, de manière à sortir un signal S sensiblement égal à la différence entre les signaux $S_1$ et $S_2$. Ce signal S prend donc sensiblement la forme suivante:

$$(10)\ S = \Sigma_{v_i} k'_i.A_i.B_i.\cos \varphi_i.T_i,$$

où $k'_i$ est égal à $k_i$ à une constante multiplicative près. Ainsi, les moyens de traitement ont éliminé sensiblement les signaux en provenance des volumes $V_a$ et $V_b$, et le signal S ne dépend que des signaux émis par le volume $V_i$ commun aux deux volumes sous investigation.

Il faut remarquer que les équations précédentes tiennent compte de la nature aléatoire des signaux émis par les différents volumes élémentaires. Ils tiennent compte également du fait que les signaux émis par les volumes $V_a$ et $V_b$ sont indépendants ou décorrélés, et que les signaux émis par le volume commun $V_i$ en direction des sondes a et b sont corrélés.

Par ailleurs, de préférence, les chemins électriques des deux sondes a et b aux moyens sommateurs 22, lorsque les moyens déphaseurs 23 sortent un signal avec un déphasage nul, sont sensiblement égaux.

La figure 6 schématise une variante de la figure 5, selon laquelle des moyens déphaseurs réglables 26 sont introduits dans le circuit électrique de l'une des sondes, et par exemple de la sonde a. Ces moyens introduisent un déphasage variable $\Delta\varphi$, se répercutant sur le déphasage final, qui devient:

$$(11)\ S = \Sigma_{v_i} k'_i.A_i.B_i.\cos (\varphi_i + \Delta\varphi).T_i$$

Le déphasage $\Delta\varphi$ modifie le poids des différents volumes élémentaires du volume $V_i$ dans le signal final. Il modifie ainsi la relation de corrélation.

Les moyens déphaseurs sont représentés dans les figures 5 et 6 sous la forme d'un coupleur 180 degrés, présentant deux sorties. Sur l'une de ces sorties, repérée 0 degré, le signal n'est pas déphasé. Sur l'autre sortie, repérée 180 degrés, le signal est en opposition de phase par rapport au signal d'entrée. Un commutateur micro-ondes 27 relie cycliquement à l'une des entrées des moyens sommateurs 22, les deux sorties du coupleur 180 degrés. Ce commutateur 27 est commandé par le générateur d'impulsions 24, ce qui est schématisé par le trait mixte 28.

D'autres moyens de déphasage 23 sont représentés dans la figure 7. Ils consistent en un circulateur 29, qui est placé dans la connexion de la sonde aux moyens sommateurs 22, et qui dérive le signal en direction d'un modulateur réflectif 30. Ce modulateur présente deux états, et est commandé par le générateur d'impulsions 24, tel que cela est schématisé par le trait mixte 31.

Dans l'un de ces états, le modulateur 30 fonctionne en court circuit, et renvoie le signal en direction du circulateur, qui repart en direction des moyens sommateurs. Ceci correspond à un déphasage nul.

Dans l'autre état, le modulateur 30 envoie le signal sur une ligne 32 se terminant par un court-circuit 33. La ligne 32 présente une longueur égale au quart de la longueur d'onde correspondant à la fréquence centrale de mesure. Ainsi, le signal parcourt les lignes 32, est réfléchi par le court-circuit 33, revient en direction du modulateur 30 puis en direction du circulateur 29. Il a ainsi parcouru, par rapport à l'état précédent, une distance sensiblement égale à une demi-longueur d'onde, ce qui le déphase de 180 degrés.

Le présent mode de mise en oeuvre de l'invention a été décrit avec deux sondes. Ce mode de mise en oeuvre peut être extrapolé, et plus de deux sondes pourraient être reliées aux moyens de corrélation qui viennent d'être décrits. Dans ce cas, les sondes supplémentaires sont reliées au sommateur via des

5

moyens déphaseurs cycliques de 180 degrés. Les moyens déphaseurs des différentes sondes sont pilotés de manière à ce que, en considérant deux signaux en provenance de deux sondes quelconques, ces signaux soient en phase sur une demi-période des moyens déphaseurs, et en opposition de phase sur une autre demi-période. Les demi-périodes expriment une durée globale vis-à-vis du cycle des moyens déphaseurs, et peuvent être constituées par des fractions de périodes qui ne sont pas nécessairement continues.

Ainsi, selon le premier mode de mise en oeuvre de l'invention, le poids du volume commun est augmenté vis-à-vis du reste des volumes sous investigation. D'autre part, dans le deuxième mode de mise en oeuvre de l'invention, le signal de sortie ne dépend sensiblement que de la température régnant dans le volume commun aux deux volumes sous investigation. Le volume commun $V_i$ devient donc le nouveau volume sous investigation. Il présente un volume plus réduit que les volumes sous investigation $V'_a$ et $V'_b$, étant donné qu'il est constitué par l'intersection de ces volumes. D'autre part, il faut remarquer que le déphaseur $\Delta\varphi$ permet "d'explorer" ce volume commun $V_i$ de manière différente.

Les figures 9 et 10 schématisent la modification du volume commun $V_i$. Dans la figure 9, cette modification est obtenue en déplaçant par translation la sonde b 35 par rapport à sonde a 34. La nouvelle position de la sonde b est schématisée par le trait mixte 36, et son volume sous investigation par le trait mixte 37. Dans le cas de la figure 9, un rapprochement relatif des deux sondes augmente le volume commun sous investigation.

La figure 10 schématise une autre modification du volume commun sous investigation, qui est obtenue par la rotation de la sonde b 38, sa nouvelle position étant schématisée par le trait mixte 40, et son nouveau volume sous investigation par le trait mixte 41. Tel que cela ressort de cette figure, le volume commun varie, du fait de la rotation, de la sonde b 38 vis-à-vis de la sonde a 39.

Naturellement, une combinaison d'une rotation et d'une translation modifie également le volume commun sous investigation $V_i$.

D'autre part, il faut remarquer qu'avantageusement, si l'on admet que les volumes sous investigation ont approximativement la forme qui a été schématisée dans les figures, ou tout au moins présentent une forme divergente à proximité de la sonde, le volume commun sous investigation est plus profond, au moins dans sa partie supérieure, que les volumes sous investigation respectifs de chaque sonde. Ainsi, il est possible d'éliminer, ou tout au moins de diminuer l'effet des signaux de surface, vis-à-vis des signaux de profondeur.

En outre, les signaux parasites provenant de l'environnement des sondes pourront être éliminés, ou tout au moins fortement affaiblis du fait de la corrélation qui est établie.

La présente invention permet donc d'améliorer la résolution spatiale d'un dispositif de mesure de température en micro-ondes, sans avoir à interchanger la sonde, et d'autre part de faire varier cette résolution spatiale, simplement en déplaçant l'une des sondes par rapport à l'autre. On pourrait en outre travailler dans des bandes de fréquences différentes pour obtenir des informations complémentaires.

Dans les deux modes de mise en oeuvre de l'invention, il est possible d'obtenir un signal de sortie sensiblement proportionnel à la température régnant dans les volumes sous investigation, et en particulier pour le deuxième mode décrit, à la température régnant dans le volume commun sous investigation. L'invention peut être combinée à des dispositifs actuellement existants notamment pour la visualisation et l'étalonnage du signal de sortie. Ces dispositifs n'ont pas été décrits et sont à la portée de l'Homme de l'Art.

L'invention est susceptible de nombreuses applications, dans le domaine médical, par exemple pour la localisation d'anomalies souscutanées. Elle est également susceptible d'applications dans le domaine agro-alimentaire, et d'une manière générale dans le cadre de mesure de température.

**Revendications**

1. Procédé de mesure de température d'un corps à l'aide de micro-ondes, consistant à placer au voisinage de la surface du corps (2) ou en contact avec celle-ci une sonde (5, 12, 18, 34, 39), qui capte les signaux de bruits thermiques émis par un premier volume (V'a) du corps (2) sous investigation associé à la sonde, caractérisé par le fait que l'on dispose au moins une autre sonde (6, 13, 19, 35, 38) du même type que ladite sonde (5, 12, 18, 34, 39) au voisinage de la surface du corps (2), ou en contact avec celle-ci ladite autre sonde captant les signaux de bruits thermiques émis par un deuxieme volume (V'_b) dudit corps (2), de manière à ce que l'ensemble des volumes (V'a, V'b) sous investigation associés aux sondes respectives présente une partie volumique commune (Vi), que l'on traite les signaux de bruits thermiques captés par les sondes en réalisant une amplification et une corrélation par laquelle on rend prépondérants les signaux émis par la partie volumique commune (Vi) vis-à-vis des signaux émis par le reste des volumes (Va, Vb) sous investigation associés aux sondes, et que l'on forme à partir des signaux rendus prépondérents un signal de sortie fonction de la température régnant dans les volumes sous investigation (V'a, V'b).

2. Procédé selon la revendication 1, caractérisé par le fait que l'on traite les signaux de bruits thermiques de manière à annuler sensiblement les signaux de bruits thermiques émis par ledit reste des volumes (Va, Vb) sous investigation, et que l'on rend le signal de sortie sensiblement directement fonction de la température régnant dans la partie volumique commune (Vi), et sensiblement indépendant du reste des volumes sous investigation (Va, Vb).

3. Procédé selon la revendication 1, caractérisé par le fait que l'on traite les signaux de bruits thermiques captés par les sondes (12, 13) en couplant électriquement les sondes (12, 13) en parallèle entre-elles.

4. Procédé selon la revendication 1 ou 2, caractérisé par le fait que, dans le cas de deux sondes, on traite les signaux de bruits captés par ces sondes (18, 19) en déphasant de 180 degrés, cycliquement, les signaux de bruits thermiques captés par l'une des sondes, dite la première sonde (19), avec un rapport cyclique sensiblement égal à 1/2, en formant la somme de ces signaux cycliquement déphasés avec les signaux de bruits thermiques captés par l'autre sonde, dite la seconde sonde (18), et en réalisant une amplification et une détection quadratique de la somme de ces signaux.

5. Procédé selon la revendication 4, caractérisé par le fait que l'on réalise une détection synchrone par rapport au déphasage des signaux cycliquement déphasés émis par la première sonde (19), du signal résultant de la détection quadratique, et que l'on sort un signal sensiblement proportionnel à la différence des amplitudes de ce signal correspondant aux deux demi-périodes du cycle de déphasage.

6. Procédé selon la revendication 4, caractérisé par le fait que l'on filtre le signal après détection quadratique par un filtrage numérique, et que l'on sort un signal sensiblement proportionnel à la différence des amplitudes de ce signal correspondant aux deux demi-périodes du cycle de déphasage.

7. Procédé selon l'une quelconque des revendications précédentes, caractérisé par le fait que l'on déplace par translation et/ou par rotation les sondes l'une relativement à l'autre et aux autres, pour faire varier la partie volumique commune (Vi).

8. Procédé selon l'une quelconque des revendications précédentes, caractérisé par le fait que l'on modifie le poids des signaux de bruits thermiques émis par les volumes élémentaires (ΔVi) de la partie volumique commune (Vi) en déphasant les signaux captés par l'une des sondes, et en faisant varier la valeur du déphasage.

9. Dispositif pour la mise en oeuvre du procédé selon la revendication 1, comportant une sonde (5, 12, 18, 34, 39) qui capte les signaux de bruits thermiques émis par un premier volume (V'a) du corps (2) sous investigation, lequel volume est associé à la sonde lorsque celle-ci est placée au voisinage de la surface du corps ou en contact avec celle-ci, et des moyens de traitement (9, 10, 14, 17, 22, 28) des signaux de bruits captés pour fournir un signal de sortie fonction de la température régnant dans le corps, le dispositif étant caractérisé en ce qu'il comprend au moins un autre sonde (6, 13, 19, 35, 38) du même type que ladite sonde (5, 12, 18, 34, 39) et susceptible d'être placée au voisinage de la surface du corps ou en contact avec celle-ci, ladite autre sonde captant les signaux de bruits thermiques emis par un deuxième volume (V'b) dudit corps (2), de manière à ce que l'ensemble des volumes (V'a, V'b) sous investigation associés aux sondes respectives présente une partie volumique commune (Vi) et que les moyens de traitement comportent un circuit de corrélation (9, 14, 22) rendant prépondérants les signaux émis par la partie volumique commune (Vi) vis-à-vis des signaux émis par le reste (Va, Vb) des volumes sous investigation associés aux sondes ainsi qu'un circuit d'élaboration (10, 17, 25) formant ledit signal de sortie à partir des signaux rendus prépondérants.

10. Dispositif selon la revendication 9, caractérisé par le fait que les sondes (12, 13) sont couplées électriquement en parallèle, le point de connexion électrique (14) étant relié à un récepteur amplificateur (17).

11. Dispositif selon la revendication 9, caractérisé par le fait que l'une des sondes (18, 19) est reliée directement à des moyens sommateurs (22), l'autre étant reliée à ces moyens via des moyens de déphasage de 180 degrés (23), cycliques, de rapport cyclique 1/2, la sortie des moyens sommateurs étant reliée à un récepteur amplificateur (25) à détection quadratique.

12. Dispositif selon la revendication 11, caractérisé par le fait que les moyens de déphasage comprennent un circulateur (29) qui dérive les signaux vers un modulateur réflectif (31), commandé en impulsions cycliques, fonctionnant sur une demi-période en court-circuit, ce qui renvoie les signaux vers le circulateur, et dérivant sur l'autre demi-période les signaux sur une ligne (32) dont la longueur électrique est sensiblement égale au quart de la longueur d'onde correspondant à la fréquence centrale de mesure, à l'extrémité (33) de laquelle les signaux sont réfléchis puis renvoyés vers le circulateur (29).

**Patentansprüche**

1. Verfahren zum Messen der Temperatur eines Körpers mit Hilfe von Mikrowellen, wobei in der Nähe der Körperoberfläche (2) oder in Berührung damit ein Meßfühler (5, 12, 18, 34, 39) angebracht wird, der die von einem ersten Volumen (V'a) des untersuchten, mit dem Fühler assoziierten Körper (2) abgegebenen Wärmerauschsignale aufnimmt, gekennzeichnet dadurch, daß man in der Nähe der Oberfläche des Körpers (2) oder in Berührung damit über zumindest einen weiteren Fühler (6, 13, 19, 35, 38) des gleichen Typs wie der vorerwähnte Fühler (5, 12, 18, 34, 39) verfügt, wobei dieser weitere Fühler die von einem zweiten Volumen (V'b) des vorerwähnten Körpers (2) abgegebenen Wärmerauschsignale aufnimmt, und zwar so, daß die Gesamtheit der untersuchten, mit den jeweiligen Fühlern assoziierten Volumen (V'a, V'b) einen gemeinschaftlichen Volumenteil (Vi) aufzeigt, daß man die von den Fühlern aufgenommenen Wärmerauschsignale verarbeitet indem man eine Verstärkung und eine Korrelation vornimmt, durch die man die vom gemeinsamen Volumenteil (Vi) abgegebenen Signale den vom Rest der untersuchten, mit den Fühlern assoziierten Volumen (Va, Vb) gegenüber überwiegend gestaltet und aufgrund der überwiegend gestalteten Signale eine Ausgangssignal bildet, das von der in den untersuchten Volumen (V'a, V'b) herrschenden Temperatur abhängig ist.

2. Verfahren gemäß Anspruch 1, dadurch gekennzeichnet, daß man die Wärmerauschsignale so verarbeitet, daß die vom vorerwähnten Rest der untersuchten Volumen (Va, Vb) abgegebenen Wärmerauschsignale etwa unterdrückt werden, und daß man das Ausgangssignal etwa unmittelbar abhängig von der im gemeinsamen Volumenteil (Vi) herrschenden Temperatur und spürbar unabhängig vom Rest der untersuchten Volumen (Va, Vb) gestaltet.

3. Verfahren gemäß Anspruch 1, dadurch gekennzeichnet, daß man die von den Fühlern (12, 13) aufgenommenen Wärmerauschsignale verarbeitet indem man die Fühler (12, 13) elektrisch parallel zueinander schaltet.

4. Verfahren gemäß Anspruch 1 oder 2, dadurch gekennzeichnet, daß man, bei zwei Fühlern, die von diesen Fühlern (18, 19) aufgenommenen Wärmerauschsignale verarbeitet indem man die von einer der Sonden, der sogenannten ersten Sonde (19) aufgenommenen Wärmerauschsignale in der Phase um 180 Grad zyklisch verschiebt, mit einem zyklischen Verhältnis, das etwa 1/2 entspricht, wobei die Summe dieser zyklisch phasenverschobenen Signale mit den Wärmerauschsignalen gebildet wird, die vom anderen Fühler, dem sogenannten zweiten Fühler (18) erfaßt werden und indem man eine Verstärkung und eine quadratische Gleichrichtung der Summe dieser Signale verwirklicht.

5. Verfahren gemäß Anspruch 4, dadurch gekennzeichnet, daß man eine Synchrongleichrichtung im Verhältnis zur Phasenverschiebung der zyklisch phasenverschobenen, vom ersten Fühler (19) abgegebenen Signale des sich aus der quadratischen Gleichrichtung ergebenden Signals verwirklicht, und daß man ein Signal ausgibt, das ungefähr proportional zur Differenz der Größen dieses Signals ist, das den beiden Halbperioden des Phasenverschiebungszyklus entspricht.

6. Verfahren gemäß Anspruch 4, dadurch gekennzeichnet, daß man das Signal nach der quadratischen Gleichrichtung über eine numerische Filterung filtert und ein Signal ausgibt, das etwa zur Differenz der Größen dieses Signals proportional ist, das den beiden Halbperioden des Phasenverschiebungszyklus entspricht.

7. Verfahren gemäß einem der vorstehenden Ansprüche, gekennzeichnet dadurch, daß man die Fühler im Hinblick auf eine Veränderung des gemeinsamen Volumenteils (Vi) durch Verschiebung und/oder Drehung eines Fühlers im Vergleich zum und zu den anderen verlagert.

8. Verfahren gemäß einem der vorstehenden Ansprüche, dadurch gekennzeichnet, daß man das Gewicht der von den Elementarvolumen (Δ Vi) des gemeinsamen Volumenteils (Vi) abgegebenen Wärmerauschsignale ändert indem man die von einem der Fühler aufgenommenen Signale in der Phase verschiebt und den Wert der Phasenverschiebung verändert.

9. Vorrichtung zum Bewerkstelligen des Verfahrens gemäß Anspruch 1, mit einem Fühler (5, 12, 18, 34, 39), der die Wärmerauschsignale aufnimmt, die von einem ersten Volumen (V'a) des untersuchten Körpers (2) abgegeben werden, wobei dieses Volumen mit dem Fühler assoziiert ist wenn dieser sich in der Nähe der Oberfläche des Körpers oder in Berührung damit befindet, sowie mit Mitteln zum Verarbeiten (9, 10, 14, 17, 22, 28) der aufgenommenen Wärmerauschsignale im Hinblick auf die Erzeugung eines Ausgangssignals, das von der im Körper herrschenden Temperatur abhängig ist, wobei die Vorrichtung dadurch gekennzeichnet ist, daß sie zumindest einen weiteren Fühler (6, 13, 19, 35, 38) des gleichen Typs wie der vorerwähnte Fühler (5, 12, 18, 34, 39) umfasst und in der Nähe der Körperoberfläche oder in Berührung damit angebracht werden kann, wobei dieser weitere Fühler die Wärmerauschsignale aufnimmt, die von einem zweiten Volumen (V'b) des vorerwähnten Körpers (2) abgegeben werden, und zwar so, daß die Gesamtheit der untersuchten, mit den jeweiligen Fühlern assoziierten Volumen (V'a, V'b) einen gemeinsamen Volumenteil (Vi) aufzeigt und die Verarbeitungsmittel einen Korrelationskreis (9, 14, 22) besitzen, der die vom gemeinsamen Volumenteil (Vi) abgegebenen Signale den vom Rest (Va, Vb) der untersuchten, mit den Fühlern assoziierten Volumen gegenüber überwiegend gestaltet, sowie mit einem Verarbeitungskreis (10, 17, 25), der das vorerwähnte Ausgangssignal aufgrund der überwiegend gestalteten Signale bildet.

10. Vorrichtung gemäß Anspruch 9, dadurch gekennzeichnet, daß die Fühler (12, 13) elektrisch parallel geschaltet sind, wobei die elektrische Verbindungsstelle (14) an einen Verstärkerempfänger (17) angeschlossen ist.

11. Vorrichtung gemäß Anspruch 9, dadurch gekennzeichnet, daß einer der Fühler (18, 19) unmittelbar an Summiergeräte (22) und der andere an diese Geräte über zyklische Phasenverschiebungsmittel um 180 Grad (23) in einem zyklischen Verhältnis von 1/2 angeschlossen sind, wobei der Ausgang der Summiergeräte an einen Verstärkerempfänger (25) mit quadratischer Gleichrichtung angeschlossen ist.

12. Vorrichtung gemäß Anspruch 11, dadurch gekennzeichnet, daß die Phasenverschiebungsmittel einen Zirkulator (29) umfassen, der die Signale zu einem reflektierenden Modulator (31) umleitet, der mit zyklischen Impulsen gesteuert wird und im Kurzschluß auf einer Halbperiode arbeitet, wodurch die Signale zum Zirkulator zurückverbracht werden, und auf die andere Halbperiode die Signale auf einer Leitung (32) ableitet, deren elektrische Länge etwa dem vierten Teil der Wellenlänge gleich ist, die der zentralen Meßfrequenz entspricht, an deren Ende (33) die Signale reflektiert und anschließend zum Zirkulator (29) zurückgeschickt werden.

**Claims**

1. Process for measuring the temperature of a body by means of microwaves, consisting in placing in proximity to the surface of the body (2) or in contact with this surface, a sensor (5, 12, 18, 34, 39) which picks up the thermal noise signals emitted by a first tested volume (V'a) of body (2) associated with the sensor, characterized in that at least another sensor (6, 13, 19, 35, 38) of the same type as said sensor (5, 12, 18, 34, 39) is disposed in the proximity to the surface of the body (2) or in contact with said surface, said other sensor picking up the thermal noise signals emitted by a second volume (V'b) of body (2), so that the whole of the tested volumes (V'a, V'b) associated with the respective sensors presents a common volume part (Vi), that the thermal noise signals picked up by the sensor are treated by realizing an amplification and a correlation, by which the signals emitted by the common volume part (Vi) are made preponderant with respect to the signals emitted by the rest of the tested volumes (Va, Vb) associated to the sensors, and that an output signal depending on the temperature prevailing in the tested volume (V'a, V'b) is formed from the made-preponderant signals.

2. Process according to claim 1, characterized in that the thermal noise signals are treated in order to appreciably cancel the thermal noise signals emitted by said rest of the tested volumes (Va, Vb), and that the output signal is appreciably made directly depending on the temperature prevailing in the common volume part (Vi) and appreciably independent of the rest of the tested volumes (Va, Vb).

3. Process according to claim 1, characterized in that the thermal noise signals picked up by the sensors (12, 13) are treated by electrically coupling the sensors (12, 13) in parallel to each other.

4. Process according to the preceding claims, characterized in that in the case of the two sensors, the thermal noise signals picked up by the sensors (18, 19) are treated by cyclically phase-shifting of 180° the thermal noise signals picked up by one of the sensors, called the first sensor (19), with a cyclic ratio appreciably equal to 1/2, by forming the sum of these signals cyclically phase-shifted with the thermal noise signals picked up by the other sensor, called the second sensor (18) and by realizing an amplification and a square-low detection of the sum of these signals.

5. Process according to claim 4, characterized in that a synchronous detection of the signal resulting from the square-low detection is realized with respect to the phase-shift of the cyclically phase-shifted signals emitted by the first sensor (19) and that a signal appreciably proportional to the amplitude difference of this signal corresponding to the two half-periods of the cycle of the phase-shift goes out.

6. Process according to claim 4, characterized in that the signal is filtered after the square-low detection by a numerical filtering, and that a signal appreciably proportional to the amplitude difference of this signal corresponding to the half-periods of the cycle of the phase-shift goes out.

7. Process according to the preceding claims, characterized in that the sensors are displaced each relatively to another and others by translation and/or rotation in order to vary the common volume part (Vi).

8. Process according to the preceding claims, characterized in that the weight of the thermal noise signals emitted by the elementary volumes (Δ Vi) of the common volume part (Vi) is modified by phase-shifting the signals picked up by one of the sensors and by varying the phase-shift value.

9. Device for implementing the process according to claim 1, comprising a sensor (5, 12, 18, 34, 39) which picks up the thermal noise signals emitted by a first tested volume (V'a) of body (2), which volume is associated with the sensor when the last is situated in the proximity to the surface of the body or in contact with said surface, as means (9, 10, 14, 17, 22, 28) for the treatment of the thermal noise signals picked up in order to deliver an output signal depending on the temperature prevailing in the body, the device being characterized in that it comprises at least another sensor (6, 13, 19, 35, 38) of the same type as said sensor (5, 12, 18, 34, 39) and liable to be placed in the proximity to the surface of the body or in contact with said surface, said other sensor picking up the thermal noise signals emitted by a second volume (V'b) of said body (2), so that the whole of the tested volumes (V'a, V'b) associated with the respective sensors presents a common volume part (Vi), and that the means of treatment comprise a correlation circuit (9, 14, 22) making preponderant the signals emitted by the common volume part (Vi) with respect to the signals emitted by the rest (Va, Vb) of the tested volumes associated with the sensors, as an elaboration circuit (10, 17, 25) forming said output signal from the made-preponderant signals.

10. Device according to claim 9, characterized in that the sensors (12, 13) are electrically coupled in parallel, the electrical connection point (14) being joined with an amplifier-receiver (17).

11. Device according to claim 9, characterized in that one of the sensors (18, 19) is directly connected with summation means (22), the other being joined with these means via some cyclic phase-shift means of 180° (23) in a cyclic ratio of 1/2, the output of the summation means being connected to an amplifier receiver (25) with square-low detection.

12. Device according to claim 11, characterized in that the phase-shift means comprise a circulator (29) which derives the signals towards a reflective modulator (31) driven by cyclic impulses, operating on a half-period in short-circuit, what returns the signals towards the circulator, and deriving on the other half-period the signals on a line (32) whose the electrical length is appreciably equal to the quarter of the wavelength corresponding to the central frequency of measurement, at the end (33) of which the signals are reflected then returned towards the circulator (29).

Fig 1

S

RECEPTEUR — 4

Sonde 1  2

3

V'

Fig 2

S

RECEPTEUR — 10

CORRELATEUR — 9

5 $S_a$  6 $S_b$  2

Sonde a  Sonde b

$\Delta v_a$  $V_a$  7  $V_b$  $\Delta v_b$  8

V'$_a$  $\Delta v_i$  11  $V_i$  V'$_b$

Fig 3

S

RECEPTEUR — 17

15  14  16

2  12  13

Sonde a  Sonde b

$\Delta v_a$  $V_a$  $\Delta v_b$

V'$_a$  $\Delta v_i$  $V_i$  V'$_b$

Fig 4

S

RECEPTEUR

15  14  16

17  $\Delta \varphi$

12  13

Sonde a  Sonde b

$V_a$  $V_b$

V'$_a$  $V_i$  V'$_b$

0 064 908

Fig 5

Fig 6

Fig 7

2

Fig 8

Fig 9

Fig 10